Europäisches Patentamt

European Patent Office

Office européen des brevets

(11) Veröffentlichungsnummer: **0 261 433 B1**

(12) **EUROPÄISCHE PATENTSCHRIFT**

(45) Veröffentlichungstag der Patentschrift: **11.11.92**

(21) Anmeldenummer: **87112436.8**

(22) Anmeldetag: **27.08.87**

(51) Int. Cl.5: **G07C 5/10**, G07B 13/00, H05K 11/02

(54) Einrichtung für ein Fahrzeuginformationsgerät.

(30) Priorität: **20.09.86 DE 3631994**

(43) Veröffentlichungstag der Anmeldung:
**30.03.88 Patentblatt 88/13**

(45) Bekanntmachung des Hinweises auf die
Patenterteilung:
**11.11.92 Patentblatt 92/46**

(84) Benannte Vertragsstaaten:
**AT DE ES FR GB SE**

(56) Entgegenhaltungen:
**EP-A- 0 057 892      DE-A- 2 848 101**
**DE-C- 3 514 438      FR-A- 2 519 832**
**GB-A- 2 143 981      GB-A- 2 163 282**
**US-A- 3 845 289**

(73) Patentinhaber: **Mannesmann Kienzle GmbH**
**Postfach 1640 Heinrich-Hertz-Strasse**
**W-7730 Villingen-Schwenningen(DE)**

(72) Erfinder: **Adams, Jürgen**
**Am Mühlweiher 1**
**W-7730 Villingen-Schwenningen(DE)**

**Beschreibung**

Die Erfindung bezieht sich auf eine Einrichtung für ein Fahrzeuginformationsgerät zur Registrierung, Errechnung und Anzeige von aus den Fahrleistungen ermittelbaren Daten, bestehend aus einem Gebermodul zur Bereitstellung von vom Fahrzeug abhängigen Daten, aus einer Zentraleinheit mit einem internen Programmspeicher und einem Datenspeicher und aus einem Anzeigeterminal.

Dem Bereich der Fahrzeuginformationsgeräte sind insbesondere Geräte zuzuordnen, wie Taxameter und Fahrtenschreiber, die abhängig von Wegstrecken- und Zeitparameter verschiedene für die Fahrleistungen relevante Daten erfassen, speichern, durch geräteinterne Rechenvorgänge bestimmte Ergebnisse ermitteln und anzeigen, und die im Bedarfsfalle durch eine wahlweise Zuordnung eines Druckermoduls auch eine Auswahl von Ergebnissen abdrucken. So ist es beispielsweise bekannt, daß in einem Taxameter aufgrund des Anschlusses eines Gebermoduls hinsichtlich der tatsächlich gefahrenen Wegstrecke eine entsprechende Impulserie in das Taxametergerät eingegeben wird, welche Impulserie in einer Recheneinheit zu Wegstreckeneinheiten und weiter in dafür zu entrichtende Fahrpreiseinheiten umgewandelt werden. Darüber hinaus werden über verschiedene Summenzähler in der Funktion von Kontrollzählern taxameterspezifische Daten abrufbereit gespeichert. Sie können durch entsprechende Betätigung von Tasten in einer großflächigen Anzeige dargestellt werden. Die Funktionsweise eines derartigen, die Fahrleistungen eines Taxifahrzeuges registrierenden Informationsgerätes wird im wesentlichen bestimmt durch ein Mikroprozessorsystem mit integriertem Festwertspeicher (ROM) für das Betriebssystem und mit einem integrierten programmierbaren Speicher (RAM) für die variablen Daten der Tarifprogramme und Anpassung an die Fahrzeugparameter.

Insgesamt gesehen jedoch bleibt der Nutzeffekt der bisher bekannten Taxametergeräte darauf beschränkt, Daten zu erfassen und Informationen zu liefern, die sich einzig auf die Betriebsweise des mit dem Taxametergerät kontrollierten Fahrzeugs beziehen.

Ähnlich verhält sich die Situation bei Fahrtenschreibergeräten (Tachograph), wo in Abhängigkeit der laufenden Uhrzeit über Mehrfachaufschrieb auf einer Fahrtenschreiberscheibe das gesamte Fahrverhalten eines Fahrzeuges über Stunden und Tage registriert wird. Die Auswertung einer derart beschriebenen und mit einem Basisraster versehenen Scheibe führt zu einer vielschichtigen Information über beispielsweise gefahrene Geschwindigkeit, Fahrweise, Wegstrecken, Arbeitszeit bzw. Lenkzeit eines Fahrers usw. Auch in diesem Gerät ist es ein Gebermodul, der in Form von Impulsfolgen die das Fahrverhalten und die Wegstrecke kennzeichnenden Informationen in den Fahrtenschreiber eingeben und so über einen zeitbezogenen Aufschrieb alle wesentlichen Informationen hinsichtlich der gefahrenen Wegstrecke speichern und anzeigen.

Auch dieses Gerät liefert als Informationsgerät lediglich Daten, die beispielsweise einer Wirtschftlichkeitsberechnung über den abgeleisteten Einsatz eines Fahrzeuges zugrunde gelegt werden können. Auch bei Erweiterung der Anzeige in der Art eines Monitors bleibt der Nutzeffekt beschränkt auf die Darstellung des momentanen Zustandes.

Wie aus der Darstellung der bekannten Fahrzeuginformationsgeräte, beispielsweise des Taxameters und des Fahrtenschreibers, hervorgeht, ist der Informationsgehalt dieser Geräte streng zweckgebunden beschränkt auf die Ermittlung eines Fahrpreises und Speicherung einiger aufsummierter Fahrleistungsdaten beim Taxameter, und beim Fahrtenschreiber erschöpft sich die Informationsvermittlung im graphischen Kurvenaufschrieb der Einzelheiten über die Fahrweise über weite Strecken und die Zeit. Dies genügt nach neuester Auffassung nicht immer, um auf Dienstfahrten allen Anforderungen eines Fahrgastes gerecht zu werden, oder auf Transportrouten eine optimale Ausnutzung von Strecke und Zeit zu erzielen. Es entspricht daher einer Vorstellung, den Informationsumfang der bisherigen bekannten Geräte zu erweitern, beispielsweise nach Gesichtspunkten, die in der Abwicklung der Fahraufträge aufgrund von Zusatzinformationen Erleichterungen einbringen und nicht zuletzt zu einer Steigerung der Wirtschaftlichkeit beitragen.

Die Dokumente US-A-3 845 289, GB-A-2 163 282 und DE-A-2 848 101 beschreiben Vorrichtungen welche ein Fahrzeuginformationssystem mit einem zugeordneten Datenträger (Kassette bzw. Kompaktdisk) beschreiben. Die handelsüblichen Datenträger sind jedoch ausschließlich dafür vorgesehen, als extern ladbare Datenspeicher kraftfahrzeugsperifische Digitaldaten zu speichern bzw. an das Fahrzeuginformationssystem abzugeben.

Aufgabe der Erfindung ist es, ein Fahrzeuginformationsgerät der angezeigten Art dahingehend zu erweitern, daß in bereits vorhandene Audio-Geräte aktuelle Informationen und Daten durch variable und extern ladbare Datenspeicher individuell in die Fahrzeuginformationsgeräte eingebbar sind.

Diese Aufgabe wird durch die im Kennzeichen des Patentanspruches 1 angegebenen Merkmale gelöst.

Weitere Merkmale zur Ausgestaltung der Erfindung sind in den Unteransprüchen enthalten.

In einem Fahrzeuginformationsgerät ist es zweckmäßig, zusätzliche Daten und Informationen nicht nur über eine Tastatur einzugeben, sondern hierfür bekannte Speichermittel zu benutzen. Insbesondere dann, wenn es sich bei der zusätzlich einbringbaren Dateninformation um veränderliche und umfangreiche Datensätze handelt, ist es von Vorteil, hierzu Datenträger zu verwenden, die sich durch einfache Handhabung in bezug auf die Aufnahme und Wiedergabe auszeichnen. Aufgrund der Tatsache, daß fast ausnahmslos in jedem Fahrzeug ein Radio-Kassettengerät installiert ist, bietet sich die Möglichkeit, ohne besonderen Aufwand das Kassettenlaufwerk zu benutzen, um eine mit Daten und Informationen geladene Standard-Kassette als Datenquelle zu überspielen. Durch die Möglichkeit, Digitaldaten und Sprache-/Musikinformationen (Analogdaten) im Fahrzeuginformationsgerät, z. B. in der zentralen Recheneinheit eines Taxameters, zu separieren, kann eine feste Installation zwischen dem Lautsprecherausgang des Radio-Kassettengerätes und dem Taxameter-Dateneingang gemäß dem Beispiel vorgenommen werden. Der Benutzer, z. B. der Taxifahrer kann durch Abspielen der Kassette, im Beispiel dem Taxameter, Daten übermitteln, wobei zur Unterstützung auch gesprochene Anweisungen vor den Datenblöcken auf dem Audio-Datenträger bzw. dem Magnetband aufgezeichnet sein können.

Durch Erweiterung der Anzeigeeinrichtung des Fahrzeuginformationsgerätes und Ausbildung als modulare Punkt-Matrix-Anzeige mit Graphik-Fähigkeit sind eine Reihe von Zusatznutzen erreichbar. Bezogen auf einen Taxameter kann im Zustand "FREI" z. B. die Anzeige von Fahr- oder Flugplänen erfolgen, so daß der Taxifahrer stets aktuelle Daten als besonderen Service anbieten kann. Die Aktualität der aus dem Audio-Datenträger überspielbaren Daten kann durch täglichen, gegebenenfalls stündlichen Wechsel des Datenträgers, beispielsweise in Form einer Magnetbandkassette, erfolgen, wobei letztere ihrerseits sehr kostengünstig durch z. B. einen Personal-Computer aktualisiert werden kann. Auf diese Weise kann eine erhöhte Flexibilität in der Informationsvermittlung an einen Fahrgast erreicht werden, über die nicht zuletzt auch im Touristikbereich, alle Sehenswürdigkeiten und aktuellen Termine angeboten werden können.

Darüber hinaus ist eine direkte Unterstützung des Taxibetriebes in der Form möglich, daß Währungsumrechnungen täglich auf die beschriebene Art aktualisiert werden können. Hierbei dient der Datenträger Magnetbandkassette sowohl als Zusatzprogrann-Datenträger als auch als Datenträger für Konstante, die gemeinsam im Taxameter zur Währungsumrechnung und Anzeige führen, beispielsweise in der Funktionsposition KASSE.

Das beschriebene Aktualisierungsverfahren kann bei allen Ausbildungsformen des Fahrzeuginformationsgerätes auch zur Übermittlung von Warn- und Dienstinformationen dienen. In einer Fahrzeugflotte ist die Ausgabe von Daten an die Fahrer, z. B. bei Schichtwechsel oder Schichtbeginn, durch Ausgabe von Magnetbandkassetten möglich, die Informationen über geänderte Verkehrsverhältnisse oder besondere Hinweise für den Schichtdienst enthalten.

Über die angezeigten Funktionen hinaus ist durch die Kombination des Fahrzeuginformationsgerätes mit einem Wiedergabegerät auf der Basis von gebräuchlichen Audio-Datenträger und über die graphikfähige Anzeigeeinrichtung jede denkbare Übertragung von Daten und Anweisungen möglich.

Ein Ausführungsbeispiel ist nachstehend anhand von Zeichnungen beschrieben.

Es zeigt

FIG. 1 den modularen Aufbau eines Kraftfahrzeuginformationsgerätes, gekoppelt mit einem Laufwerk für die Wiedergabe von Informationen aus einem Audio-Datenträger,

FIG. 2 ein Blockschaltbild zur Übertragung und parallelen Aufbereitung der Signale aus den Lautsprecher-Endverstärkern eines Radio-Kassetten-Wiedergabegerätes,

FIG. 3 ein Blockschaltbild wie FIG. 2, jedoch mit gesteuerter Ausgangsstufe, integriert im Fahrzeuginformationsgerät.

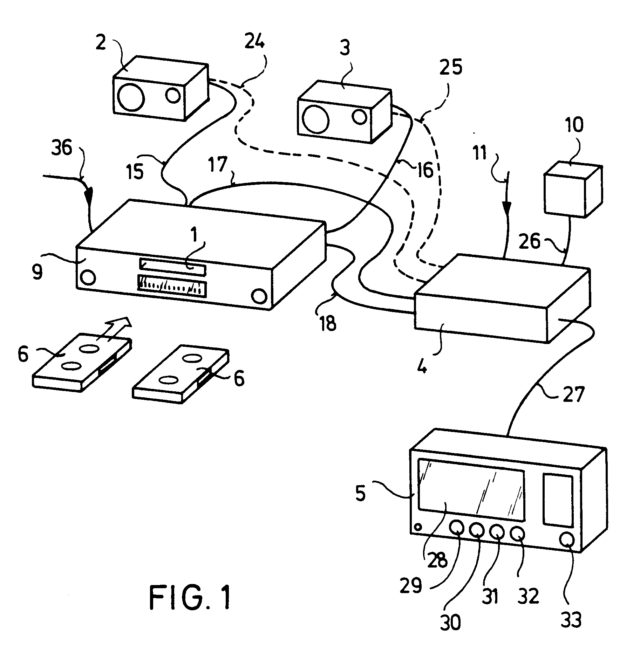

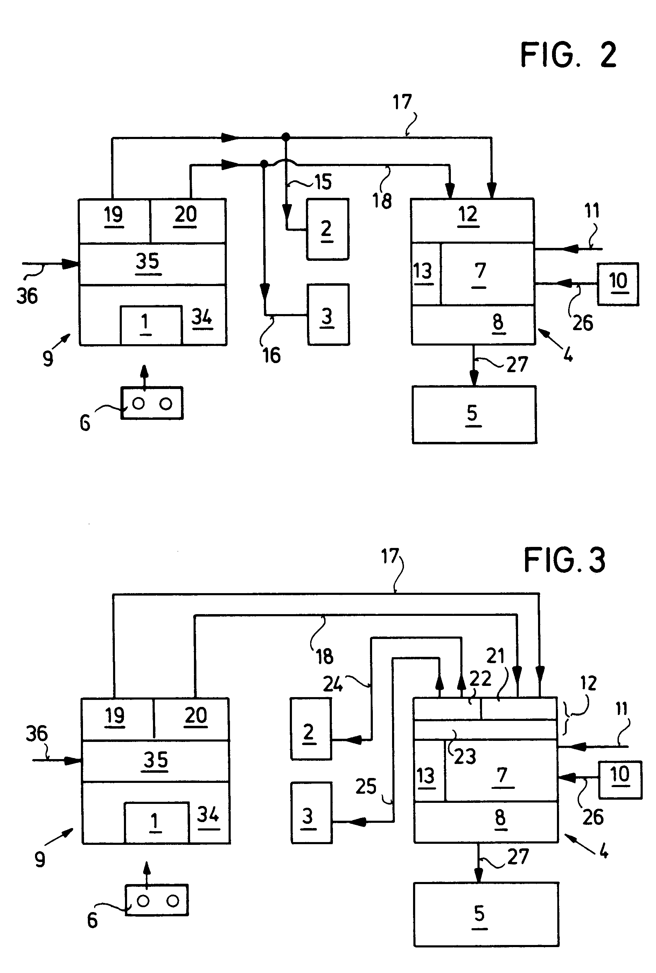

Die FIG. 1 zeigt in schematischer Darstellung ein Ausführungsbeispiel eines Fahrzeuginformationsgerätes 4, das gekoppelt ist mit einem Laufwerk 1 eines Radio-Kassetten-Gerätes 9 in modularem Aufbau. Von dem Radio-Kassetten-Gerät 9 führen Leitungen 15, 16 ausgangsseitig von Lautsprecher-Endverstärkern 19, 20 entsprechend zu zwei Lautsprechern 2, 3 zur Übertragung von Sprache/Musikinformationen auf einem Audio-Datenträger 6, der eine genormte Bandkassette oder eine Kompakt-Disc sein kann und über einen nicht näher bezeichneten Schacht in das Radio-Kassetten-Gerät 9 eingelegt wird. Parallel zu den Leitungen 15, 16 führen zwei weitere Leitungen 17, 18 von den Lautsprecher-Endverstärkern 19, 20 in das Fahrzeuginformationsgerät 4. In einer weiteren Ausbaustufe nach Blockschaltbild gemäß FIG. 3 sind die Lautsprecher-Endverstärker 19, 20 ausschließlich mit einer Signal-Eingangsstufe 21 im Fahrzeuginformationsgerät 4 verbunden, die im wesentlichen über Filter der Signalaufbereitung dient, wie später noch erläutert wird. Schließlich ist die weitere Ausbaustufe nach Blockschiltbild FIG. 3 dahingehend modifiziert, daß bei Audio-Signalen ungedämpfte Signale über eine Ausgangsstufe 22 und Leitungen 24, 25 an die Lautsprecher 2, 3 geführt werden. Wie weiter aus FIG. 3 hervorgeht, ist ein Impulsgeber 10 über eine Leitung 26 an das Fahrzeuginformationsgerät 4 angeschlossen. Der Impulsgeber 10 dient der Erzeugung und Übertragung von Wegstreckenimpulsen in das Fahrzeuginformationsgerät 4, in dem auch Baugruppen für den Taxameterbetrieb untergebracht sind. Ausgangsseitig ist das Fahrzeuginformationsgerät 4 lt. FIG. 1 über eine Leitung 27 mit einer getrennten, modularen Anzeigeeinrichtung 5 verbunden, die vorzugsweise als Punkt-Matrix-Display 28 ausgebildet ist, zur wahlweisen Darstellung von Ziffern und graphischen Zeichen. Die Anzeigeeinrichtung 5 weist Bedienelemente 29 bis 33 auf, die überwiegend einer taxameterspezifischen Betätigung dienen.

Das Blockschaltbild nach FIG. 2 zeigt ein Ausführungsbeispiel eines Fahrzeuginformationsgerätes 4 in Kombination mit einem Radio-Kassetten-Gerät 9, durch welches auf einem Audio-Datenträger 6 gespeicherte Daten in das Fahrzeuginformationsgerät 4 übertragbar sind. Das Laufwerk 1 ist, wie in FIG. 2 angegeben ist, eine integrierte Baugruppe des Radio-Kassettengerätes 9 und besteht, wie nicht näher angezeigt ist, im wesentlichen aus einer mechanischen Kassettenführung, dem Tastkopf und den Antriebselementen. An das Laufwerk 1 schließt sich als weitere Baugruppe ein Signalverstärker 34 einschl. der üblichen Regel-Bedieneinheiten an. Eine weitere Baugruppe wird gebildet durch einen Empfänger 35 mit einer Energieversorgung 36, wobei der Empfänger 35 intern auf die Lautsprecher-Endverstärker 19, 20 geschaltet ist. Der Ausgang der Lautsprecher-Endverstärker 19, 20 ist einerseits über die Leitungen 15, 16 an die Lautsprecher 2, 3 und andererseits über Leitungen 17, 18 an eine Signaleingangs- und Ausgangsstufe 12 des Fahrzeuginformationsgerätes 4 angeschlossen. In das Fahrzeuginformationsgerät 4 eingebaut ist außerdem eine taxameterspezifische Baugruppe 7, die im wesentlichen aus einem Mikroprozessor, einem Speicher, einem Netzteil, einem Signaleingang für den Anschluß des Impulsgebers 10 besteht, und die die Funktion eines zentralen Rechners ausübt. Dem zentralen Rechner angeschlossen ist eine autonome Uhr 13. Schließlich ist zur Weiterleitung der zur Anzeige bestimmten Daten und Informationen anschließend an die Taxameterbaugruppe 7 ein Display-Interface 8 vorgesehen, das ausgangsseitig über die Leitung 27 mit der modularen Anzeigeeinrichtung 5 verbunden ist zur Darstellung der Daten aus dem Datenband und der über die Einrichtungen 1, 6, 9, 4 verarbeiteten Dateninformationen auf dem Punkt-Matrix-Display 28. Eine Versorgungs-Zuführleitung 11 in das Fahrzeuginformationsgerät 4 liefert die Betriebsspannung, Zündschaltsignale, Funkempfangssignale für den Empfänger 35, Statussignale, Sitzkontaktsignale an die taxameterspezifische Baugruppe 7 usw.

Die Signaleingangs- und Ausgangsstufe 12 im Fahrzeuginformationsgerät 4 gemäß FIG. 3 besteht aus einer Decoder- und Steuereinheit 23 für die Signaleingangsstufe 21 mit Filter und Signalaufbereitungseinrichtungen und für die Signalausgangsstufe 22 mit Dämpfungsschaltung zur Unterdrükkung bzw. Reduzierung des Signals an die Lautsprecher 2, 3 im Daten-Ladebetrieb in das Fahrzeuginformationsgerät 4.

Die Funktion der Signaleingangs- und Ausgangsstufe 12 gemäß der Darstellung nach FIG. 2 besteht in einer parallelen Aufbereitung der Signale aus den Lautsprecher-Endverstärkern 19, 20 an die Lautsprecher 2, 3 dergestalt, daß die Lautstärke und damit die Signalamplituden ausgeregelt werden zu einem verarbeitungsfähigen, normierten Signal für die Weiterverarbeitung in der Signalabtrennung und Codierung.

Die Signalabtrennung ist ein Bestandteil der Funktion des Decoders, durch die im wesentlichen die Präsenz von Audio-oder Datensignalen aus den Endverstärkern 19, 20 erkannt wird. Der Decoder wandelt die Daten, welche in serialer Form und gegebener Tonfrequenz oder Phasencodierung vorliegen, um in Bit-Informationen, welche dann in einem Mikroprozessor der Baugruppe 7 verarbeitet werden können.

Die Aufgabe der in FIG. 3 aufgeteilt dargestellten Signaleingangs- und Ausgangsstufe 12 ist - wie bei der Lösung nach FIG. 2 - eine parallele Aufbereitung der Signale in der Signal-Eingangsstufe 21 und eine Weiterleitung der unbehandelten Signale aus den Endverstärkern 19, 20 an eine gesteuerte Signal-Ausgangsstufe 22, die im wesentlichen aus einem Dämpfungsglied besteht. Die Signal-Abtrennstufe als Teil des Decoders in der Decoder- und Steuereinheit 23 steuert nun den Signalfluß dergestalt, daß bei vorliegenden Audio-Signalen die Signal-Ausgangsstufe 22 ungedämpfte Signale an die Lautsprecher 2, 3 weiterleitet und daß bei vorliegenden Daten-Signalen die Decoder- und Steuereinheit 23 zur Umwandlung in Bit-Informationen Signale aus der Signal-Eingangsstufe 21 erhält. Gleichzeitig wirkt die Signal-Ausgangsstufe 22 als Dämpfungsglied zur Unterdrückung der akustischen Wiedergabe des Datensignalstromes in den Lautsprechern 2, 3.

Die in den FIG. 2 und 3 dargestellten Anordnungen sind in einer Einkanal- oder einer Zweikanal-Betriebsweise in bezug auf die Datenübertragung zwischen dem Radio-Kassettengerät 9 und dem Fahrzeuginformationsgerät 4 anwendbar.

Bei einer Einkanal-Verarbeitung der durch den Audio-Datenträger 6 an das Fahrzeuginformationsgerät 4 zu übertragenden Informationen ist nur ein Lautsprecher-Endverstärker 19 oder 20 mit der Signaleingangs- und Ausgangsstufe 12 verkoppelt. Hierdurch besteht die Möglichkeit, parallel zur Daten-Übermittlung auf dem mit der Signaleingangsstufe 12 verkoppelten Kanal diese begleitende Instruktionen oder laufende Informationen ohne Beeinträchtigung des Daten-Ladevorganges auszugeben.

Diese Betriebsweise kann beispielsweise eine hilfreiche Unterstützung bei Servicearbeiten darstellen, bei denen parallel zu einem Daten-Ladevorgang Interaktionen im Bereich der taxameterspezifischen Baugruppe 7 bzw. über die Bedienelemente der Anzeigeeinrichtung 5 erforderlich sind.

Bei einer Zwei- oder Mehrkanal-Kopplung zwischen dem Radio-Kassettengerät 9 und dem Fahrzeuginformationsgerät 4 sind mindestens zwei Ausgänge der Lautsprecherendverstärker 19, 20 mit der Signaleingangs- und Ausgangsstufe 12 verkoppelt. Hiermit besteht die Möglichkeit zur Verwendung von Datensignalen hoher Informationsdichte oder hoher Datensicherheit bei der Übermittlung an die Signaleingangs- und Ausgangsstufe 12 im Fahrzeuginformationsgerät 4. Der eine Kanal über Leitung 17 übermittelt z. B. die "Normal"-Daten, während der zweite Kanal über Leitung 18 Daten-Sicherungsinformationen, wie Inversdaten oder fortlaufende parallele CRC-Informationen übermittelt (CRC = Cycling-Redundant-Check).

In einem praktischen Anwendungsfall des Fahrzeuginformationsgerätes 4 in einem Taxifahrzeug enthält letzteres die Baugruppe 7 eines Taxameters und ist gekoppelt mit einem Standard-Kassettengerät zur Abspielung von genormten Bandkassetten und mit einer modular im Bedienbereich des Taxifahrers angeordneten Anzeigeeinrichtung 5 mit Punkt-Matrix-Display 28. Das Fahrzeuginformationsgerät 4 ist mit seinem zugehörigen Signaleingang mit einem Lautsprecher 2, 3 des Radio-Kassettengerätes 9 parallel geschaltet. Die so verkoppelte Gerätkombination läßt sich in zwei Betriebsarten betreiben.

In einer ersten Betriebsart dient die Kombination in der Art eines Taxameters allein der Berechnung des Fahrpreises während einer Fahrt oder der Anzeige von Kontrollzählerdaten und anderen Servicedaten. Gleichzeitig ist auch das Radio-Kassettengerät 9 autonom betriebsbereit für den Empfang einer Rundfunksendung oder im Abspielbetrieb einer Musikkassette.

In einer zweiten Betriebsart bleibt die Taxameterfunktion erhalten und wird ergänzt durch das Überspielen von Dateninformationen aus einem Audio-Datenträger 6 in Form einer Kassette vom Radio-Kassettengerät 9 in das Fahrzeuginformationsgerät 4. In der Praxis erhält der Taxifahrer zu Beginn einer Schicht eine Datenkassette ausgehändigt, die beispielsweise mit Daten zu Terminaufträgen für den Tagesablauf geladen ist. Nach Übernahme des Fahrzeuges schiebt der Fahrer die Datenkassette in das Laufwerk 1 des Radio-Kassettengerätes 9. Nach dem Anlaufen der Datenkassette erfolgt aus dem Lautsprecher 2, 3 eine Instruktion, wie z. B. "Zündschalter einschalten". Auf der Anzeigeeinrichtung muß die taxameterspezifische Information "FREI" erscheinen. Nach einer eingestellten Reaktionszeit erfolgt die Übertragung der Daten aus der Kassette in das Fahrzeuginformationsgerät 4. Das Ende der korrekten Datenübertragung aber auch ein Übertragungsfehler kündigt sich auf dem Display 28 der Anzeigevorrichtung 5 an. Auch im Lautsprecher 2, 3 erfolgt ein Hinweis, z. B. "Datenübertragung beendet, Anzeigehinweis beachten, bei Fehlermeldung Kassette neu starten".

Nach korrekt erfolgter Datenübertragung kann schließlich der Taxifahrbetrieb aufgenommen werden. Im Laufe der Schicht vergleicht das Fahrzeuginformationsgerät 4 die aktuelle Zeit der internen autonomen Uhr 13 mit den zuvor aufgenommenen Daten, die in einem RAM in der taxameterspezifischen Baugruppe 7 hinterlegt sind. Wird ein zeitlich definierter Fahrauftrag erkannt, so erfolgt eine entsprechende Anzeige auf dem Punkt-Matrix-Display 28 beispielsweise in der nachfolgend dargestellten, lesbaren Form: Terminfahrt 11.30 h von Hafenstraße 30 nach Rosenplatz 3 für Herrn Müller.

Begleitet wird eine derartige Anzeige durch einen Summ-oder Piepston in der Anzeigeeinrichtung 5.

Nach Schichtende wird der Audio-Datenträger 6 bzw. hier die Datenkassette wieder in der Zentrale abgegeben und kann für eine folgende Fahrschicht mit neuen Daten geladen werden.

**Patentansprüche**

1. Einrichtung für ein Fahrzeuginformationsgerät zur Registrierung, Errechnung und Anzeige von aus den Fahrleistungen ermittelbaren Daten, bestehend aus einem Gebermodul zur Bereitstellung von vom Fahrzeug abhängigen Daten, aus einer Zentraleinheit mit einem internen Programmspeicher und einem Datenspeicher und aus einem Anzeigeterminal,
dadurch gekennzeichnet,
daß ein im Fahrzeug eingebautes Laufwerk (1) für die Wiedergabe von in einem Audio-Datenträger (6) gespeicherten Analogdaten (Sprache-/Musikinformationen) gleichzeitig mit dem Fahrzeuginformationsgerät (4) verbunden ist, dergestalt, daß auf dem Audio-Datenträger (6) gespeicherte digitale Daten in das Kraftfahrzeuginformationsgerät (4) übertragbar und anzeigbar sind.

2. Einrichtung nach Anspruch 1,
dadurch gekennzeichnet,
daß der Audio-Datenträger (6) ein Kompaktdisc-Plattenspeicher ist, dessen gespeicherte Informationen über eine Ansteuerung des Laufwerks (1) als Teil eines Kompaktdisc-Wiedergabegerätes in das Fahrzeuginformationsgerät (4) übertragbar sind.

3. Einrichtung nach Anspruch 1,
dadurch gekennzeichnet,
daß der Audio-Datenträger (6) eine Magnetband-Datenkassette ist, deren gespeicherte Informationen über eine Ansteuerung des Laufwerkes (1) als Teil eines Radio-Kassetten-Wiedergabegerätes (9) in das Fahrzeuginformationsgerät (4) übertragbar sind.

4. Einrichtung nach den Ansprüchen 2 und 3,
dadurch gekennzeichnet,
daß ein Lautsprecher-Endverstärker (19 oder 20) des Wiedergabegerätes (9) für eine Abnahme der gespeicherten Informationen aus dem Audio-Datenträger (6), die als Serialdaten vorzugsweise in Richttaktschrift, Wechseltaktschrift oder in Mehrton-Folgen vorliegen, ausgebildet ist.

5. Einrichtung nach Anspruch 4,
dadurch gekennzeichnet,
daß durch eine permanente Ankopplung des LautsprecherEndverstärkers (19, 20) des Wiedergabegerätes (9) an eine Signaleingangs- und Ausgangsstufe (12) des Fahrzeuginformationsgerätes (4) eine feste Verbindung gewährleistet ist.

6. Einrichtung nach Anspruch 5,
dadurch gekennzeichnet,
daß im Fahrzeuginformationsgerät (4) in der Signaleingangs- und Ausgangsstufe (12) eine Informationsweiche in Form eider Decoder- und Steuereinheit (23) vorgesehen ist, in der eine Erkennung und Separation zwischen digitalen Informationsdaten und Sprache/Musikaufzeichnungen stattfindet.

7. Einrichtung nach Anspruch 1,
dadurch gekennzeichnet,
daß der Audio-Datenträger (6) für eine Speicherung und Übertragung von Tarifdaten in das Fahrzeuginformationsgerät (4) vorgesehen ist, welche Tarifdaten Einer Berechnung von Fahrleistungen im Fahrzeuginformationsgerät (4) zugrunde gelegt sind.

8. Einrichtung nach Anspruch 1,
dadurch gekennzeichnet,
daß mit der Zuordnung des Audio-Datenträgers (6) als mobiler und veränderbarer Zusatzspeicher in den Funktionsbereich des Fahrzeuginformationsgerätes (4) eine Einspeisung und Anzeige von aktuellen Informationen realisierbar ist.

9. Einrichtung nach Anspruch 8,
dadurch gekennzeichnet,
daß über eine entsprechende Ladung des Audio-Datenträgers (6) aktuelle Verkehrsverbindungen, geänderte Verkehrsführungen und Zeitangaben im Fahrzeuginformationsgerät (4) anzeigbar sind.

10. Einrichtung nach Anspruch 9,
dadurch gekennzeichnet,
daß mit den mit dem Audio-Datenträger (6) einspielbaren Daten in das Fahrzeuginformationsgerät (4) auf einer als Punkt-, Matrix-Display (28) ausgebildeten Anzeigeeinrichtung (5) Textinformationen und symbolische Straßenkarten graphisch darstellbar sind.

11. Einrichtung nach Anspruch 8,
dadurch gekennzeichnet,
daß mit dem Audio-Datenträger (6) Währungsumrechnungsfaktoren in das Fahrzeuginformationsgerät (4) eingebbar sind, mit welchen eine täglich aktualisierbare Kursangabe anzeigbar ist.

12. Einrichtung nach Anspruch 8,
dadurch gekennzeichnet,
daß mit durch den Audio-Datenträger (6) einspielbaren Termindaten in Verbindung mit einer internen autonomen Uhr (13) im Fahrzeuginformationsgerät (4) zu einem aktuellen Zeitpunkt eine Zeichen- und Textinformation zur Wahrnehmung eines fest vorgegebenen Auftrages in der Anzeigeeinrichtung darstellbar ist.

13. Einrichtung nach Anspruch 8,
gekennzeichnet durch
eine vermischte Ablage von Digital- und Analogdaten im Audio-Datenträger (6) durch welche eine Bedienerführung mit gesprochenem Wort bei der Handhabung, bei der Einspeisung von Daten und bei der Suche von Datenabschnitten abspielbar ist.

**Claims**

1. Means for a vehicle information device for recording, calculating and displaying data which may be determined from the driving work carried out, comprising a transmitter module for making available data dependent on the vehicle, a central processing unit having an internal program memory and a data store, and a display terminal, characterized in that a drive (1), installed in the vehicle, for reproducing analog data (speech/music information) stored in an audio data carrier (6) is at the same time connected to the vehicle information device (4), such that digital data stored on the audio data carrier (6) may be transferred and displayed in the motor vehicle information device (4).

2. Means according to Claim 1, characterized in that the audio data carrier (6) is a compact disc store, whereof the stored items of information may be transferred to the vehicle information device (4) by way of controlling the drive (1) as part of a compact disc reproduction device.

3. Means according to Claim 1, characterized in that the audio data carrier (6) is a magnetic tape data cassette, whereof the stored items of information may be transferred to the vehicle information device (4) by way of controlling the drive (1) as part of a radio cassette reproduction device (9).

4. Means according to Claims 2 and 3, characterized in that a loudspeaker final amplifier (19 or 20) of the reproduction device (9) is constructed for removing the stored items of information from the audio data carrier (6), which exist as serial data preferably in single-frequency recording mode, two-frequency recording mode or in multi-tone sequences.

5. Means according to Claim 4, characterized in that a secure connection is ensured by means of a permanent coupling of the loudspeaker final amplifier (19, 20) of the reproduction device (9) to a signal input and output stage (12) of the vehicle information device (4).

6. Means according to Claim 5, characterized in that there is provided in the vehicle information device (4) in the signal input and output stage (12) an information separating filter in the form of a decoder and control unit (23) in which a recognition and separation between digital information data and speech/music recordings takes place.

7. Means according to Claim 1, characterized in that the audio data carrier (6) is intended for storing and transferring tariff data to the vehicle information device (4), which tariff data are used as a basis for a calculation of driving work carried out in the vehicle information device (4).

8. Means according to Claim 1, characterized in that by means of the assignment of the audio data carrier (6) as a mobile and variable additional store, it is possible to feed and display current information to the function range of the vehicle information device (4).

9. Means according to Claim 8, characterized in that by way of a corresponding loading of the audio data carrier (6) current traffic connections, altered traffic guides and times may be displayed in the vehicle information device (4).

10. Means according to Claim 9, characterized in that textual information and symbolic streetmaps may be illustrated graphically on a display means (5) constructed in the vehicle information device (4) as a dot matrix display (28), by means of the data which may be played in by means of the audio data carrier (6).

11. Means according to Claim 8, characterized in that by means of the audio data carrier (6) currency conversion factors may be input into the vehicle information device (4), by means of which currency conversion factors a rate of exchange which can be brought up to date daily may be displayed.

12. Means according to Claim 8, characterized in that by means of the booking data, which may be played in by means of the audio data carrier (6), in conjunction with an internal autonomous clock (13) in the vehicle information device (4), at a current time a character and text information for observing a predetermined assignment may be illustrated in the display means.

13. Means according to Claim 8, characterized by a mixed filing of digital and analog data in the audio data carrier (6), by means of which filing an operator guidance by means of the spoken word may be played during handling, during infeed of data and during the search for data sections.

## Revendications

1. Dispositif pour un appareil d'informations de véhicule destiné a l'enregistrement, au calcul et à l'affichage de données déterminables à partir des prestations de déplacements, constitué d'un module de transmetteur pour la mise à disposition de données dépendant du véhicule, d'une unité centrale avec une mémoire de programme interne et une mémoire de données, et d'un terminal d'affichage, caractérisé par le fait qu'un mécanisme d'entraînement (1) encastré dans le véhicule pour la reproduction de données analogiques (informations parlées/musicales) mémorisées dans un support de données à audiofréquences (6) est simultanément relié audit appareil d'informations de véhicule (4), de telle sorte que des données numériques mémorisées sur ledit support de données à audiofréquences (6) puissent être transmises et affichées audit appareil d'informations de véhicule (4).

2. Dispositif selon la revendication 1,
caractérisé par le fait
que le support de données à audiofréquences (6) est une mémoire à disque audionumérique dont les informations mémorisées peuvent être transmises, par I intermédiaire d'une attaque du mécanisme d'entraînement (1) en tant qu'élément constituant d'un appareil de reproduction de disque audionumérique, à l'appareil d'informations de véhicule (4).

3. Dispositif selon la revendication 1,
caractérisé par le fait
que le support de données à audiofréquences (6) est une cassette à bande magnétique dont les informations mémorisées peuvent être transmises, par l'intermédiaire d'une attaque du mécanisme d'entraînement (1) en tant qu'élément constituant d'un appareil de reproduction radiocassette (9), à l'appareil d'informations de véhicule (4).

4. Dispositif selon l'une quelconque des revendications 2 et 3,
caractérisé par le fait
qu'un amplificateur final de haut-parleurs (19 ou 20) de l'appareil de reproduction (9) est conçu pour une prise en charge des informations mémorisées en provenance du support de données à audiofréquences (6) qui se présentent, comme données séquentielles de préférence, enregistrées en modulation de phase, enregistrées par durée d'impulsions ou en séquences multisonores.

5. Dispositif selon la revendication 4,
caractérisé par le fait
qu'un couplage permanent de I amplificateur final de hautparleurs (19, 20) de l'appareil de reproduction (9) à un étage d'entrée et de sortie de signaux (12) de l'appareil d'informations de véhicule (4) assure une liaison inamovible.

6. Dispositif selon la revendication 5,
caractérisé par le fait
que dans l'appareil d'information de véhicule (4), dans l'étage d'entrée et sortie de signaux (12) est prévu un système de séparation des voies d'information sous forme d'un ensemble de décodage et de commande (23) dans lequel a lieu une détection et séparation entre les données d'information numériques et les enregistrements de parole/musique.

7. Dispositif selon la revendication 1,
caractérisé par le fait
que le support de données à audiofréquences (6) est prévu pour une mémorisation et transmission de données tarifaires à l'appareil d'informations de véhicule (4), lesdites données tarifaires étant prises pour bases d un calcul de prestations de déplacements dans ledit appareil d'informations de véhicule (4).

8. Dispositif selon la revendication 1,
caractérisé par le fait
que l'association du support de données à audiofréquences (6) en tant que mémoire supplémentaire mobile et variable permet de réaliser une mise en mémoire et un affichage d'informations actuelles dans le domaine fonctionnel de l'appareil d'informations de véhicule (4)

9. Dispositif selon la revendication 8,
caractérisé par le fait
que, par l'intermédiaire d'un chargement approprié du support de données à audiofréquences (6), il est possible d'afficher des voies de communication actuelles, des changements dans le guidage du trafic et des indications de temps dans l'appareil d'informations de véhicule (4).

10. Dispositif selon la revendication 9,
caractérisé par le fait
qu'avec les donnes transmissibles à l'aide du support de données à audiofréquences (6) à l'appareil d'informations de véhicule (4), il est possible de représenter graphiquement des informations de texte et des cartes routières symboliques sur un dispositif d'affichage (5) réalisé sous forme d'afficheur matriciel (28).

11. Dispositif selon la revendication 8,
caractérisé par le fait
que le support de données à audiofréquences (6) permet d'entrer des facteurs de conversion de devises dans l'appareil d'informations de véhicule (4) avec lesquels il est possible d'afficher une indication de cours quotidiennement remettable à jour.

12. Dispositif selon la revendication 8,
caractérisé par le fait
qu'avec les données de rendez-vous pouvant être transmises par le support de données à audiofréquences (6) en combinaison avec une montre autonome interne (13) dans l'appareil d'informations de véhicule (4), il est possible de représenter, à un instant actuel, une information sous forme de symboles et de textes pour satisfaire une demande ferme de mission, sur le dispositif d'affichage.

13. Dispositif selon la revendication 8, caractérisé par

une mise en mémoire mixte de données numériques et analogiques dans le support de données à audiofréquences (6) qui permet de reproduire un guidage parlant de l'opérateur lors de la manipulation, lors de la mise en mémoire de données et lors de la recherche de segments de données.

FIG. 1

# FIG. 2

# FIG.3